# EUROPEAN PATENT APPLICATION

(11) **EP 0 978 785 A1**
(43) Date of publication of application: **09.02.2000**
(21) Application number: 98306358.7
(22) Date of filing: 07.08.1998
(51) Int. Cl.: G06F 11/14

(54) **Data backup and recovery**

(71) Applicant: Hewlett-Packard Company, Palo Alto, California 94304 (US)
(72) Inventor: Gold, Stephen, Winterbourne Down, Bristol BS17 1DJ (GB); Crighton, Ian Peter, Shepton Mallet, Somerset BA4 5XX (GB)
(74) Representative: Lawman, Matthew John Mitchell

(57) **Abstract**

The present invention provides a tape drive 140 configured to operate as a bootable device for a PC 100. The tape drive 140, thus, has two modes of operation: a first mode in which it operates as a normal tape drive 140; and a second in which it emulates a bootable device such as a CD-ROM drive. The present invention also provides application software for backing up and restoring computer system data. The application software is configured to cause a PC 100 running the software to generate a bootable image (containing an operating system, including the PC 100's hardware configuration, and data recovery application software) suitable for re-building the PC 100 in the event of a disaster, such as hard disk corruption or system destruction. The bootable image is stored on tape in front of an actual file system backup data set.

In the second mode of operation, the tape drive 140 can be used to boot the PC 100 and restore the operating system and application software. When loaded, the application software is configured to switch the tape drive 140 into the first mode of operation and restore the file system backup data set to the PC 100.

## Description

### Technical Field

The present invention is in the field of data backup and recovery in data processing systems and, in particular, magnetic tape based data backup and recovery.

### Background Art

One of the main reasons for using a magnetic tape based backup solution with a computer system is that it provides a relatively cheap way of protecting against a disaster that might destroy valuable data on primary storage such as a hard disk.

For the present purposes, a 'backup solution' comprises a physical tape drive and backup application software, which, when executed on a computer system, operates to copy the data to be backed up from the computer system (or network of computer systems) to the tape drive or library of tape drives, for storage onto tape media.

Backup application software also provides functionality for enabling data, which has been backed up to tape media, to be restored to the original computer system. Such data restoration is sometimes also known as disaster recovery (DR). For the present purposes, the elements of backup application software that relate to DR will be referred to as a 'DR solution'.

In the event of a disaster, such as hard disk failure or even system destruction, typically, a priority is to rebuild a working system as soon as possible.

Many vendors of backup application software sell backup application software including a DR solution that aims to reduce the amount of manual system rebuilding required before lost data could be restored. Without such DR solutions, it could take several hours or even days just to prepare a computer system to restore the data from tape media before restoring the actual data, since it is necessary to first install and configure an operating system, tape drivers and the backup application software.

Known DR solutions typically require user-generation of a set of DR floppy disks. A reason that floppy disks are used is that they provide a generic means of booting practically every PC-based computer system.

The DR floppy disks are used to bootstrap (or boot) the computer system and typically load a minimal version of the main operating system, known as a DR operating system, along with a minimal version of the backup application software comprising DR functionality, thus providing enough functionality to build new disk partitions, access the tape drive and restore the data from tape media.

Typically, DR floppy disks need to be regenerated by a user whenever the system hardware configuration changes, and particularly when a SCSI (Small Computer Systems Interface) configuration changes. For example, if a new SCSI Host Bus Adaptor (HBA) is added to a server, with a respective new device driver, this device driver needs to be added to the DR floppy disks so that the new SCSI HBA is recognised when rebuilding the computer system.

Generally, therefore, having 'current' DR floppy disks available relies on a user generating them, keeping them up to date, and being able to find them if a disaster occurs. This is an overhead, which sometimes leads to DR floppy disks not being generated at all, disks being allowed to get out of date, or disks being misplaced over time.

It would, therefore, be desirable to provide a more convenient DR system.

### Disclosure of the Invention

An improved DR system is facilitated, in accordance with a first aspect of the present invention, by a magnetic tape data storage and retrieval apparatus, comprising:
interface means for receiving control signals from a host computer and for returning response signals to the host computer;
selection means for selecting a first mode of operation or a second mode of operation of the apparatus; and
processing means for generating responses to received control signals in dependence upon the selected mode of operation, said responses being arranged:
   a) in the first mode, into a format normally associated with a particular initial program load device; and
   b) in the second mode, into a format normally associated with a magnetic tape data storage and retrieval apparatus.

Advantageously, an appropriately configured host computer can boot from such apparatus and restore backed up data in a single operation, which does not include DR floppy disks. As such, it is not necessary for DR floppy disks to be created or maintained at all.

To that end, preferably, in the first mode, the processing means is arranged to generate, in reply to a device type inquiry signal from the host computer, a response identifying the apparatus as being the particular initial program load device rather than as being a magnetic tape data storage and retrieval apparatus.

Preferably, in the first mode, the processing means is arranged to generate a response, in reply to a request signal from the host computer to read and return data from a specific portion of a substantially random access data storage medium of the initial program load device, the response comprising data read from tape media, said data being arranged in the response in the format associated with the particular initial program load device.

In a preferred embodiment of the present invention, the selection means is a manually-operated external switch normally dedicated to the function of ejecting the tape media from the device.

In a preferred embodiment of the present invention, the particular initial program load device is a CD-ROM drive device.

In accordance with a second aspect of the present invention, a data processing system comprises:
a host computer comprising means arranged for controlling data backup and restore operations; and
connected to the host computer, a magnetic tape data storage and retrieval apparatus as hereinbefore described,
the means for processing data backup and restore operations being configured, for writing bootable system data to the magnetic tape data storage and retrieval apparatus as part of a backup operation.

In accordance with a third aspect of the present invention, a method of backing up data from a host computer to a magnetic tape data storage and retrieval apparatus as hereinbefore described comprises:
arranging bootable image data into a data set to be backed up, said bootable image data including data normally associated with booting from a particular initial program load device; and
transmitting the data set to a magnetic tape data storage and retrieval apparatus.

In accordance with a fourth aspect of the present invention a method of restoring to a host computer data from tape media, the method being suitable for recovering a file system of the host computer, comprises the steps of:
connecting to the host computer magnetic tape data storage and retrieval apparatus as hereinbefore described, said apparatus containing tape media having a bootable image and operating in the first mode of operation as an initial program load device;
initiating a boot sequence of the host computer, the boot sequence including the steps of searching for an initial program load device, locating the magnetic tape data storage and retrieval apparatus and recognising it as an initial program load device and determining that bootable media is present in the device;
booting from data stored on the tape media; and
restoring the data from the tape media.

Other aspects, embodiments and features of the present invention are hereafter claimed, and will become apparent from the following description.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a high-level schematic block diagram showing a computer and a tape drive;
Figure 2 is a diagram representing the high-level logical arrangement of data comprising a CD-ROM file system;
Figures 3a and 3b are diagrams representing the high-level logical arrangements of two exemplary DR data formats on tape;
Figure 4 is a flow diagram illustrating the steps involved in writing a DR file system to tape media; and
Figure 5 is a flow diagram illustrating the steps involved in setting a tape drive into 'DR Mode' and booting a computer from the tape drive.

### Best Mode For Carrying Out the Invention, & Industrial Applicability

There will now be described by way of example only the best mode contemplated by the inventors for carrying out the invention. In the following description numerous specific details are set forth in order to provide a thorough understanding of the present invention. It will be apparent however, to one skilled in the art, that the present invention may be practised without using these specific details. Also, well-known methods and structures have not been described in detail so as not to unnecessarily obscure the present invention.

The present embodiment, as will be described, provides an improved tape-based backup solution, which comprises an improved DR solution and modified tape drive apparatus. Significantly, the present backup solution obviates DR floppy disks, while maintaining the advantages thereof, but requires no changes to computer system hardware, BIOS (Basic Input/Output System) or operating system in order to function.

A system according to the present embodiment will now be described.

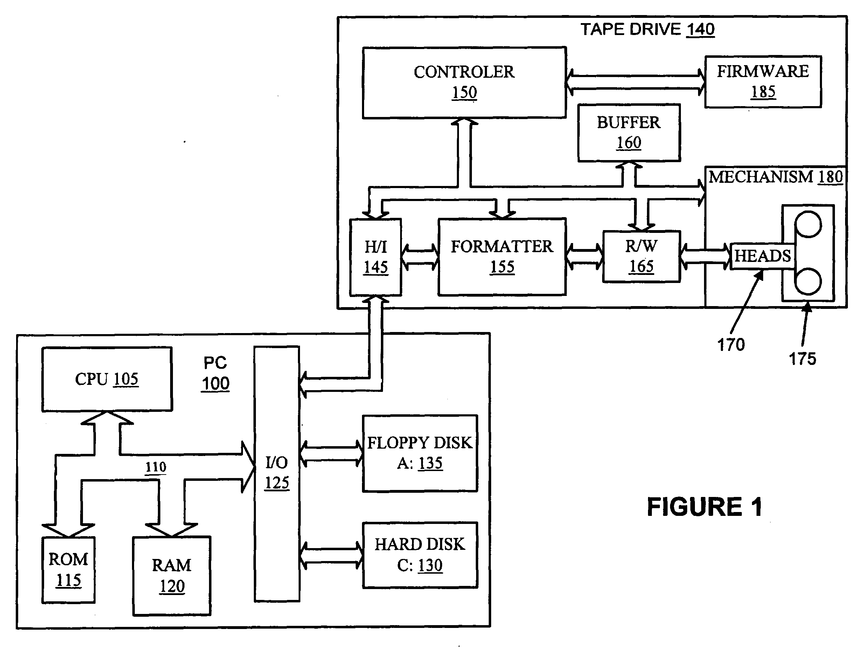

Figure 1 is a block diagram, which illustrates a PC 100 connected to a standard tape drive 140, which has been modified as will be described below. In particular, the diagram illustrates the basic components of the PC 100 and the tape drive 140. The PC 100 is either an MS-DOS based machine, or a Windows NT or Windows 95/98 machine; historically sometimes known as an IBM-AT compatible machine.

The tape drive 140 is, for example, a well-known DDS (Digital Data Storage) tape drive 140, DLT (Digital Linear Tape media) tape drive 140 or other tape media device.

As shown very simplistically in Figure 1, the PC 100 includes a CPU 105 (Central Processing Unit), which is in communication, via a system bus 110, with ROM 115 (Read Only Memory), RAM 120 (Random Access Memory) and an I/O (Input/Output) subsystem 125. The I/O subsystem 125 connects the PC 100 to a number of storage devices, namely, a hard disk drive 130, a floppy disk drive 135 and the tape drive 140; the hard disk drive 130 and floppy disk drive 135 are represented as internal devices of the PC 100, whereas the tape drive 140 is represented as an external device, in this arrangement. For simplicity only, other standard devices, such as the keyboard, mouse and VDU, are not illustrated.

As also shown in Figure 1, a typical tape drive 140 includes a host interface 145 for transmitting data between the tape drive 140 and the PC 100. Control signals received from the PC 100 are passed to a controller 150, which controls the operation of all components of the tape drive 140. The controller 150 typically comprises a microprocessor, for example a Motorola 68000 series microprocessor.

During a data backup operation, data to be backed up, which is received by the host interface 145 from the PC 100, is passed directly to the formatter 155, which formats the data, for example by compressing the data and adding error correction and detection codes. The formatted data is then stored in a buffer 160, comprising, for example, a bank of 8 Mbytes of RAM. When appropriate, a read/write block reads the formatted data from the buffer 160 and converts the data into electrical signals suitable for driving magnetic read/write heads 170, which write the data to tape media 175. The tape media 175 is mounted in a tape mechanism 180, which loads and ejects the tape media 175 and winds the tape media 175 forwards or backwards as required.

For a data restore operation, data is read from the tape media 175, passes in the reverse direction through the tape drive 140 and back to the PC 100.

The host interface 145, formatter 155 and read/write blocks typically each comprise one or more appropriately programmed application-specific integrated circuits (ASICs).

The components of the PC 100 and tape drive 140 described above are all standard, well-known components, which will, thus, not be described in any more detail so as not to obscure the present invention.

The program, or firmware 185, which controls the controller 150 in the tape drive 140, is stored in a ROM. The firmware 185 instructions are read by the controller 150 from the ROM and are then processed and acted on by the controller 150.

The firmware 185 can, if required, be updated by writing a new set of instructions to the existing ROM (if the ROM is an EEPROM) using a firmware update process, which is well known and will, thus, not be described herein. Alternatively, the ROM may simply be replaced with one containing new instructions. In this way, it is a relatively simple process to modify the behaviour of a tape drive 140.

In the present description, the PC 100 communicates with the tape drive 140 using one of the well-known Standard SCSI protocols, such as SCSI2. Accordingly, the I/O subsystem 125 and the host interface 145 incorporate appropriate respective SCSI adapters. A detailed description of the SCSI protocol will not be included herein, since it is well known and only peripheral to the understanding of the invention. Alternatively, other protocols such as Fibre Channel, EISA or PCA could be used.

In order for any PC 100 to function, it must follow software or hardware instructions. Typically, standard programs that run on a PC 100 are stored on a hard disk drive 130, and are loaded into RAM 120 to be processed by the CPU 105 when necessary. From the RAM 120, the CPU 105 can access the instructions coded into the program and run them.

On power-up, or system reset, however, the RAM 120 is empty and there are no program instructions to follow. Therefore, a BIOS program is provided, which is "hard-wired" into ROM 115 and is responsible for starting the PC 100.

BIOS programs follow a uniform standard that was created, and has been developed over the years, by the computer industry, so that compliant CPUs always addresses the same place in ROM to find the start of a BIOS program. A CPU retrieves and begins executing its initial instructions from this ROM location.

Once initiated, the BIOS program begins the system boot sequence, which calls other programs, gets the operating system loaded, and prepares the PC 100 for normal use.

BIOS programs for PCs are specific to each different PC hardware platform, but provide the same, standard interface to higher level operating systems and application software. Thus, a single operating system or application software package is able to run on many different hardware platforms, as long as the BIOS is standard.

One of the first tasks of a boot sequence is a power-on self-test (POST). After the POST, the PC 100, underthe control of the BIOS program, initialises boot devices such as the keyboard and VDU (both not shown). One or more of these boot devices may have its own specific BIOS program, which is located and initialised by the main BIOS program. Typically, video drivers and SCSI adapters have their own BIOS programs held in ROM on their respective interface cards. Next, the BIOS program will cause the PC 100 to check the system's logical devices, such as LPT1 and COM1, and memory configuration. Eventually, the BIOS program causes the PC 100 to check for an initial program load device (IPLD) from which to load and execute 'bootable' data.

'Bootable' data normally comprises an operating system and resides at a specific location on the hard disk drive 130, which is usually allocated with the drive letter "C:". Thus, normally, the PC's operating system is booted from the hard disk drive 130.

However, BIOS programs generally define that a floppy disk drive 135, allocated with the drive letter "A:", is accessed, before the hard disc drive 130, to see if it contains a bootable floppy disk. In this way, it is possible to boot the PC 100 from a floppy disk irrespective of whether the hard disk drive 130 contains bootable data. This is the main reason why DR floppy disks are the standard means for beginning a DR procedure.

Modern BIOS program standards also provide support for booting a PC from a CD-ROM drive (for more information on Bootable CD-ROM drives, see for example the "El Torito - Bootable CD-ROM drive Format Specification", Version 1.0, January 35, 1995, created jointly by IBM Corporation and Phoenix Technologies Ltd.). It would, therefore, be possible to generate DR CD-ROM media instead of, or as well as, DR floppy disks. However, there would be little advantage in adopting this approach, and a cost increase.

Currently, PC BIOS standards specify booting from floppy disk, hard disk or CD-ROM devices, although, the standards do allow for remote booting across networks, for example using Plug and Play functionality (for reference, see for example the "Plug and Play BIOS Specification", Version 1.0A, by Compaq Computer Corporation, Phoenix and Intel Corporation). For a detailed description of a current BIOS standard, see for example "BIOS Boot Specification", Version 1.01, January 11, 1996, by Compaq, Phoenix and Intel.

In the light of current BIOS standards and of the difficulties perceived by the present inventors in creating and maintaining up-to-date DR floppy disks, the present inventors have developed an improved backup solution, which facilitates DR using only appropriate backup application software, a tape drive and a recent backup of PC data held on tape media; and, significantly, there is no need for DR floppy disks. Significantly also, the solution described herein requires no changes to be made to PC hardware, BIOS or operating system in order to function. These features are believed by the present inventors to represent significant advantages over known backup solutions.

In accordance with the present embodiment, the firmware 185 in the tape drive 140 is modified to provide both a 'Normal Mode' of operation, in which the tape drive 140 behaves as a tape drive 140, and a 'DR Mode' of operation, in which the tape drive 140, in effect, includes the ability to emulate a CD-ROM drive. The CD-ROM drive emulation is achieved in part by configuring the tape drive 140 to identify itself to the PC 100 as a CD-ROM drive and also by modifying the SCSI command set in the tape drive 140 to emulate the SCSI command set of a CD-ROM drive. With the ability to emulate a CD-ROM drive, the tape drive 140 can act as an IPLD, without the need to modify existing PC BIOS standards, PC hardware or PC operating systems.

Whether the tape drive 140 operates in Normal Mode or DR Mode in the present embodiment is determined by user selection. The user selection of mode is performed without the need for any additional tape drive hardware, by using the tape drive Eject button; if the tape drive 140 is powered on with the Eject button held down, the DR Mode of operation is selected, otherwise the Normal Mode is selected. This selection function is achieved by modifying the tape drive's firmware 185 to check the status of the Eject button during a power-on self-tests sequence. Alternatively, DR Mode could be selected by holding the Eject button down for a long time period (such as five seconds), when the tape drive 140 is already powered on, and the firmware 185 would be modified to check the length of the period the Eject button is held down to determine whether the operation is an eject or the user selecting DR Mode. Various other means for selecting mode could be employed, for example by providing a specific DR button or switch on the tape drive 140. However, the present implementation has the benefit of not requiring any physical modification to the tape drive 140.

While in DR Mode, the tape drive 140 is configured to disable support for SCSI Disconnect/Reconnect operations, and it also disables any operations (e.g. pause mode) that cause the tape media 175 to be semi-loaded after a period of inactivity.

The new or modified commands required for DR Mode will now be described.

### TEST UNIT READY

This command uses the same SCSI CDB (Command Data Block) as in normal tape drive 140 mode and behaves in a similar way, the difference being that a received Test Unit Ready during "DR Mode" initialisation should report NOT READY with "device not ready, coming ready" (sense key 2, extended sense 0401).

### INQUIRY

In DR Mode, this command uses the same CDB as in normal tape drive 140 mode and behaves in a similar way, the difference being that the Peripheral Device Type bits in all of the supported Inquiry Data Pages are different. The Peripheral Device Type is set by Byte 0, Bits 0-4 of each Inquiry Data Page, and is changed from 1 (tape media device type) to 4 (CD-ROM media device type).

This command is used by the BIOS during the boot sequence to determine which devices are bootable (hard disk or CD-ROM types) and thus to check whether they contain bootable media. The command is also used during the boot sequence, when the DR operating system is running, since it uses Inquiry data to determine which device driver types to load for each device to make them accessible.

### START/STOP UNIT

This command uses a similar CDB as the LOAD/UNLOAD command, except that the Load bit is ignored and the command always returns "GOOD" status.

### MODE SENSE/SELECT

These commands are generally used for reading or setting any configuration options in a SCSI device via Mode Sense pages (each page represents a specific type of configuration data/options). In the present case, a new Mode Sense page is needed to control the operating mode of the device, to allow switching between Normal Mode and DR Mode, and vice-versa. This allows the backup application software to switch the tape drive 140 from DR Mode back to Normal Mode when the backup application software is ready to start reading conventional backup data from the tape drive 140 and restoring it to the hard disk drive 130 of the PC 100.

The Mode page header values for "Medium type" and "Density code" need to comply with CD-ROM media, used by the DR operating system to determine the type of CD-ROM media present when it is preparing to copy data from the CD-ROM device to continue the boot sequence.

The Mode Parameter Header data that is used in Mode Sense and Mode Select commands is changed to include the CD-ROM device specific bits:

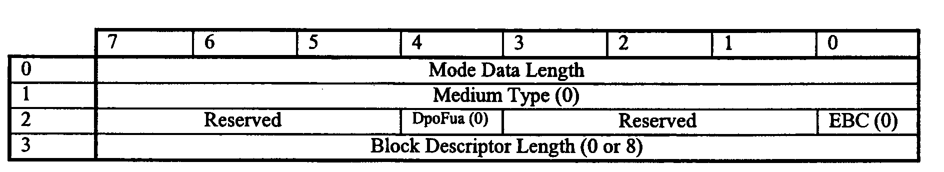

The Mode Block Descriptor data is different from the tape drive 140 mode, only in that the Density Code byte is set to 0x01 and the Block Length is set to 3048 and unchangeable.

There is also a new Mode page to toggle the DR Mode operation, as follows:

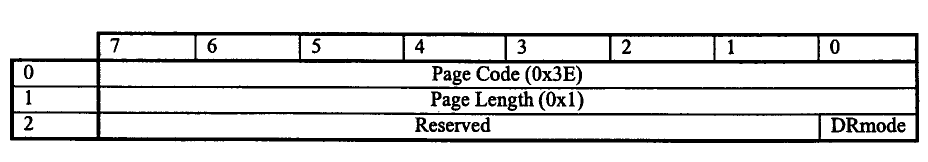

The 'DRmode' bit controls which mode of operation the tape drive 140 is operating in. When DRmode is set to zero, the tape drive 140 is switched back from DR Mode to Normal Mode. When DR Mode is set to one, the tape drive 140 attempts to initialise DR Mode as if the user had initiated the front-panel button DR sequence and returns "GOOD" status on success. If there is no tape media or non-DR tape media loaded, then the command returns "CHECK CONDITION" with sense key set to "Illegal Request".

### READ(10)/READ(6)

The Read(6) command is optional on CD-ROM devices, and is not supported in DR Mode. Thus, the device returns CHECK CONDITION with Illegal Request (sense key 0x5) and Unsupported Command Code (extended sense 0x2000).

The Read(10) command reads a fixed number of blocks from a Logical Block Address value representing the logical read start location rather than the current physical location on the tape. The Read(10) CDB is as follows:

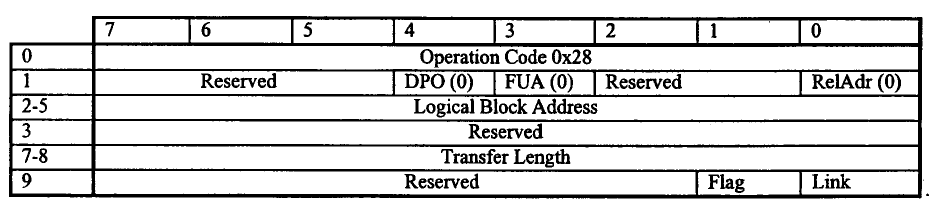

The Disable Page Out (DPO) and Force Unit Access (FUA) options are not supported, since tape drive 140 caching is mandatory (as will be described below) in this embodiment. The Logical Block Address value indicates the starting location of a read, relative to block zero at the beginning of the block device (i.e. the emulated CD-ROM media). The Transfer Length indicates the number of blocks to be read from the tape drive 140 and transferred back to the tape drive 140.

### SEEK

In DR Mode, this command moves the logical position of the tape drive 140 to another block location (obviously this command is only normally valid in random access devices such as hard disk drives and CD-ROM drives). The new CDB is:

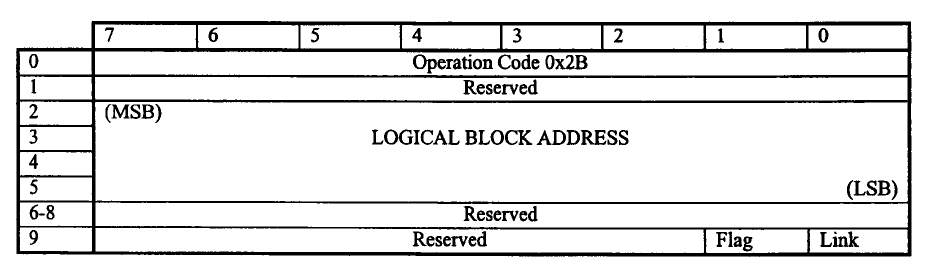

This allows the PC 100 to provide advance notification that particular data may be requested in a subsequent command. No further action is taken for this command, and "GOOD STATUS" is always returned while in DR Mode.

### READ CAPACITY

This command obtains the number of logical blocks contained in the media and the size of each block. The new CDB is:

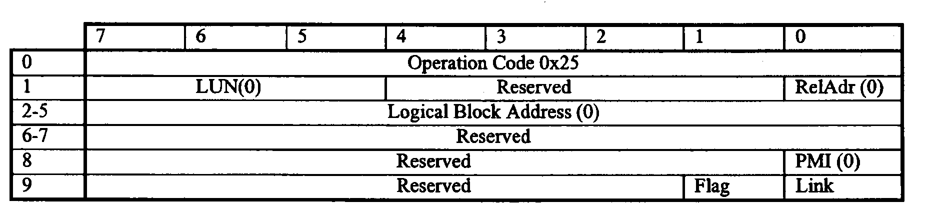

The RelAdr, Logical Block Address and PMI fields only support zero values. Any non-zero values are ignored.

The following READ CAPACITY data should be returned, representing the maximum number of 2048 byte blocks:

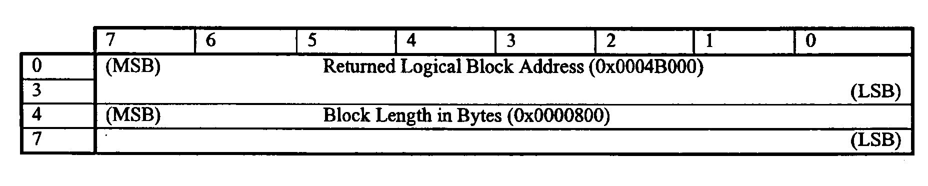

### READ TOC

This command provides a means to obtain from a table of contents (TOC) the number of tracks and their locations. The new CDB is:

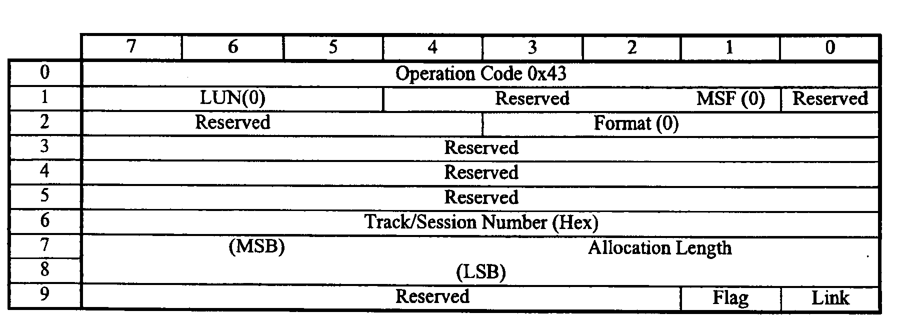

The MSF and Format fields only support values of zero, and any non-zero values used will return "CHECK CONDITION" with sense key set to "Illegal Request" and extended sense set to "Illegal Parameter in CDB".

The Track/Session Number field specifies the starting track number for which the data shall be returned. Since there is only one track possible on data CD-ROM media, any value other than zero or one will return "CHECK CONDITION" with sense key set to "Illegal Request" and extended sense set to "Illegal Parameter in CDB".

The command returns a TOC response data block, as shown below. This contains four header bytes and then descriptor blocks for track 0x1 (data track) and track 0xAA (lead-out area). The values in the response data block are fixed:

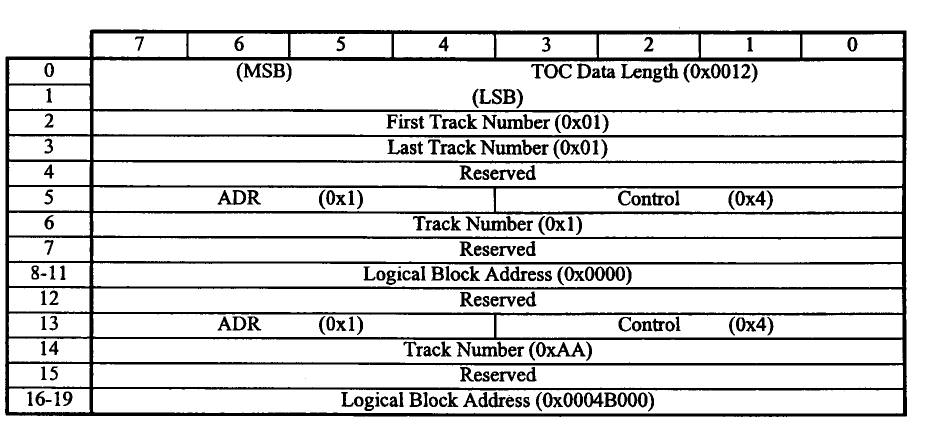

Once the firmware 185 in the tape drive 140 has been configured to provide the two modes of operation - Normal Mode and DR Mode, including CD-ROM drive emulation - it is necessary to provide a bootable CD-ROM image on the tape media 175, for the tape drive 140 to use during DR.

In accordance with the present embodiment, a bootable CD-ROM image is stored in a pre-defined location on the tape media 175. The CD-ROM image contains an entry that identifies the image as being 'bootable'. The image itself is generated by the backup application software that originally created the backup tape media 175, as will be described in more detail below.

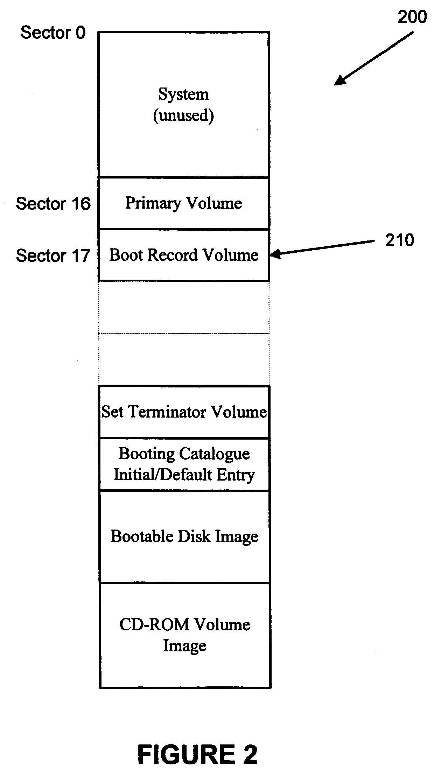

Figure 2 illustrates the format of a bootable CD-ROM image 200 according to the El Torito specification. In particular, as shown in the table below, a Boot Record Volume 210 includes, in byte offset 7-26, the text "EL TORITO SPECIFICATION" padded with zeros. As will be described, it is this part of the CD-ROM image that, when encountered, indicates to the tape drive 140 and PC 100 that the media is DR media according to the present embodiment.

| **Offset** | **Type** | **Description** |
|---|---|---|
| 0 | Byte | Boot Record Indicator, must be 0 |
| 1-5 | Byte | ISO-9660 Identifier, must be "CD001" |
| 6 | Byte | Version of this descriptor, must be 1 |
| 7-26 | Byte | Boot System Identifier, must be "EL TORITO SPECIFICATION" padded with 0's. |
| 27-46 | Byte | Unused, must be 0 |
| 47-4A | Dword | Absolute pointer to first sector of Boot Catalogue |
| 4A-7FF | Byte | Unused, must be 0 |

The backup application software is configured to automatically add the CD-ROM image onto the tape media 175 each time a backup operation that overwrites the media is enacted, if the tape drive 140 is DR capable. One method of achieving this is by writing the CD-ROM image to the tape media 175 in the specified location as part of a standard tape format operation (which is performed each time a backup that overwrites the media is done).

Additionally, it is believed to be advantageous for the backup application software to provide a user option to add the CD-ROM image, even when the tape drive 140 is not DR capable, so that the resulting tape media 175 could still be used in a DR-capable drive. One method for the backup application software to detect the DR capability of a tape drive 140 is to check for the presence of the new SCSI Mode page for DR control, which is described above.

The CD-ROM image reflects the current PC configuration in terms of installed hardware devices, for example SCSI HBA. In other words, the equivalent of an up-to-date set of DR floppy disks is created automatically each time the PC 100 is backed up, which may be as frequently as on a daily basis. Therefore, the chance of there only being in existence out of date DR media is greatly reduced.

The specific contents of the CD-ROM image are defined by the backup application software and, generally, contain whatever the application would normally have written to a DR floppy disk set. This typically consists of an image of the operating system, which, when executed, can control the PC 100, along with a sub-set of the backup application software that, specifically, can perform DR operations. Generally, also, the CD-ROM image complies with the following rules:
the CD-ROM image must be the same as a bootable CD-ROM image, so that if the image was copied onto physical CD-ROM media it could be still be booted on a system; and
the CD-ROM image structure must comply with the ISO-9660 CD-ROM file system format and the El-Torito bootable CD-ROM specification.

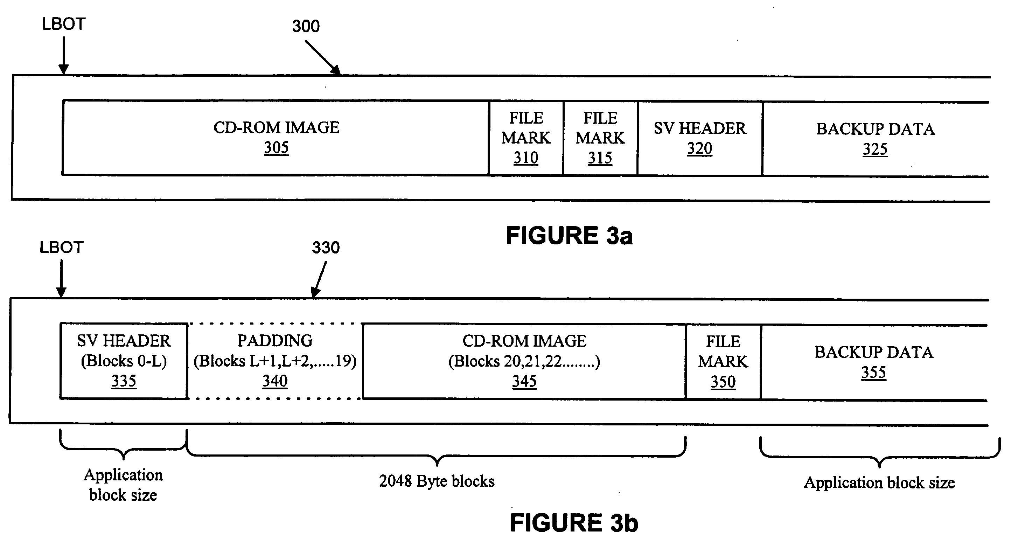

The diagram in Figure 3a illustrates one possible location for a CD-ROM image 305 at the beginning of a length 300 of tape media 175. The CD-ROM image 305 is followed by two filemarks, 310 and 315, an application software vendor (SV) header 320, which identifies that the media has been generated by particular backup application software, and finally, the backup data 325 itself.

However, given that known backup application software generally uses the first few blocks of data on the tape media 175 for an SV header, the above scheme would mean that the new DR-capable backup tape media 175 would not be recognised by previous versions of the application. Therefore, the present inventors have determined that the scheme depicted in Figure 3b is more preferable, as it supports backwards compatibility with previous versions of backup application software.

In Figure 3b, the first few blocks of data on a length 330 of tape media 175 are a standard SV header 335, followed by multiple blank blocks 340 to pad the application header 335 out to a predefined size (i.e. 19 blocks), and then by the CD-ROM image 345, followed by a filemark 350, and, finally, the backup data 355. This means that the start of the CD-ROM image 345 is always 20 blocks from LBOT (the Logical Beginning Of Tape), and thus easy for the tape drive 140 to locate.

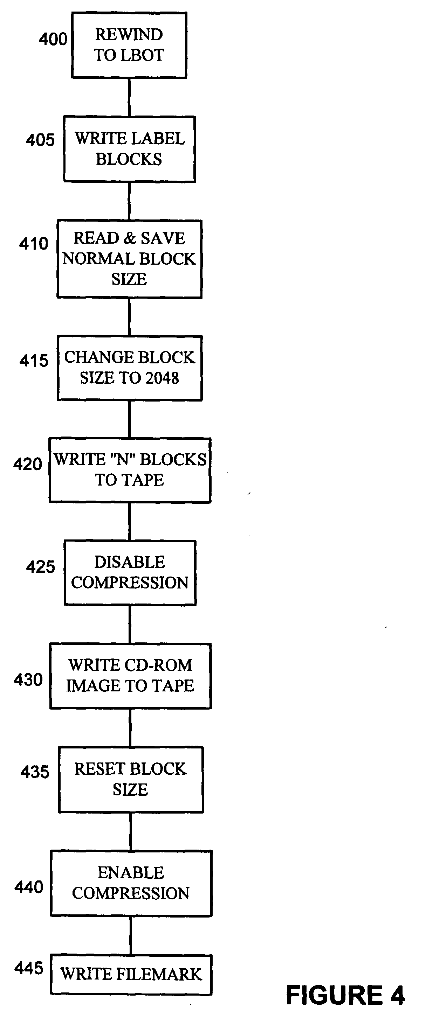

With reference to Figure 4, there will now be described a method of writing the entire DR image file to tape media 175 in a fixed location in the format illustrated by Figure 3b.

In step 400, the tape media 175 is rewound to LBOT. Then, in step 405, the normal application software label blocks 335 are written to the tape media 175 with the standard application software block sizes. In step 410, the application software normal fixed block size is read using a Mode Sense command, and the value is saved. Then, in step 415, the fixed block size is changed to 2048 bytes using a Mode Select command. In step 420, "N" null blocks 340 of data are written to the tape media 175 using fixed block mode write until the specified start location of the CD-ROM image, where:
N = (20 - number of application label blocks)

Next, in step 425, any hardware compression is disabled using a Mode Select command. Then, in step 430, the CD-ROM image 345 is written to the tape media 175 with fixed block mode write. In step 435, the current fixed block size is changed back to the original application block size, and, in step 440, hardware compression (if applicable) is re-enabled using appropriate Mode Select commands. Finally, a filemark 350 is written to tape.

The resulting tape format should not interfere with backwards compatibility of the backup tape with previous versions of the application software, since the CD-ROM image data after that application label should never be accessed.

If the PC configuration changes such that the current DR image file needs updating, then, preferably, DR image file updates should be applied without needing to re-create the entire DR image file. Such updates may be due to hardware changes (e.g. new SCSI HBAs) or operating system partition/volume changes. Then, the updates to the DR image file are written to the tape by overwriting only the old parts of the image file.

If the DR image file has been updated but subsequent backup operations are appending to the backup media rather than overwriting, then an error message should be generated by the application software, warning the user that their current backup media does not include the latest DR updates and that a full backup with overwrite is recommended.

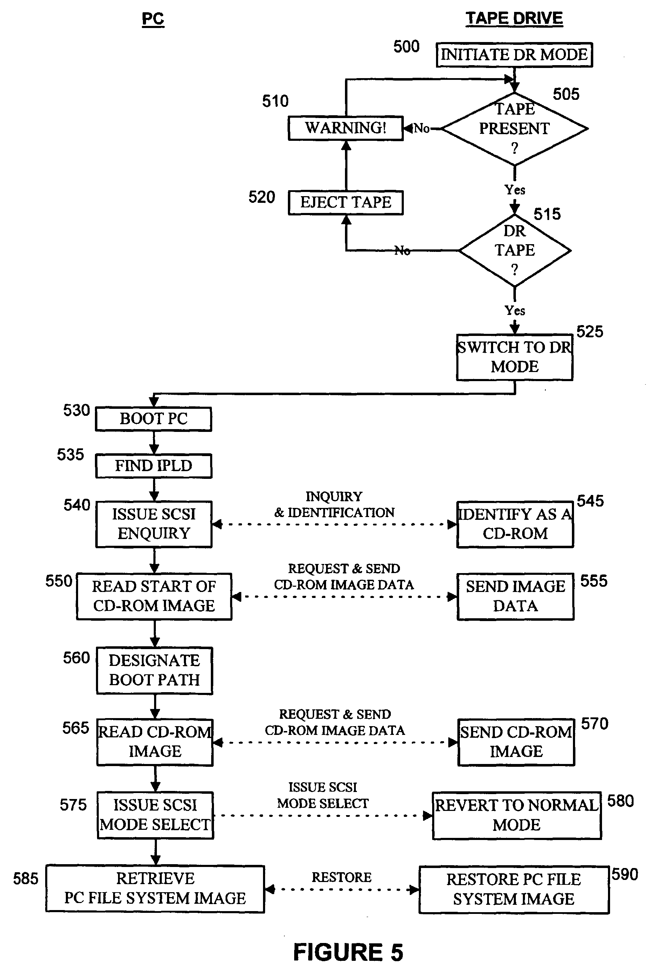

A DR operation will now be described in more detail with reference to the flow diagram in Figure 5. In Figure 5, the solid lines represent the primary process flow and the broken lines represent interactions between the PC 100 and the tape drive 140.

According to Figure 5, in step 500, a user initiates DR Mode in the tape drive 140 by holding down the Eject button when the power is switched on. As a result, the tape drive 140 continues as follows.

In step 505, the tape drive 140 determines whether tape media 175 is present in the tape drive 140, and gives a warning to the user if not, in step 510. The warning is provided via an appropriate front-panel display signal.

If, or once, tape media 175 is loaded, in step 515, the firmware 185 checks to see if the tape media 175 is valid DR tape media. This is achieved by rewinding the tape media 175 to LBOT, reading from the beginning of the tape media 175 and searching for an appropriate Boot System Identifier entry in a Boot Record Volume Description of a CD-ROM image (block 38 from LBOT, bytes 7-26, must be "EL TORITO SPECIFICATION" padded with 0's). While checking the tape media 175, the tape drive 140 reports NOT READY with "device not ready, coming ready" (sense key 0x2, extended sense 0x0401) status to any SCSI commands received thereby.

If the tape media 175 is found to be DR media then, in step 525, the tape drive 140 switches to DR Mode. Otherwise, in step 520, the tape media 175 is ejected and another appropriate warning signal is provided via the front panel display, in step 510.

In "DR Mode", the tape drive 140 enables the required CD-ROM SCSI commands, and sets appropriate, front-panel indicators to indicate DR Mode.

The tape drive 140 remains in "DR Mode" until one of the following conditions are met:
tape drive 140 is power cycled;
backup application software sends a DR Mode page command to disable DR Mode; or
user manually ejects the loaded DR capable media.

The tape drive 140, is configured to not exit "DR Mode" when receiving a SCSI bus reset. When exiting "DR Mode", the emulated CD-ROM SCSI commands are disabled and the tape drive 140 reverts to Normal Mode; the tape drive 140 then appears to be in the same state as if it had just been powered on.

In step 530, the PC 100 is booted and carries out the steps defined by the BIOS program, as described above. At the appropriate time, in step 535, the PC 100 searches for an IPLD, which contains a bootable file system. The typical BIOS boot sequence is:
1. Search for a floppy disk drive containing a bootable floppy disc - if found, then attempt to boot from this, otherwise
2. Search for a CD-ROM drive containing bootable CD-ROM media - if found, then attempt to boot from this, otherwise
3. If no bootable floppy disk or CD-ROM drive is found, then attempt to boot from hard disk drive.

Depending on how the BIOS program is configured, the PC 100 may alternatively attempt to boot from a hard disk drive before a CD-ROM drive. If this is the case, the DR should not be affected since, after a disaster, the user could change the BIOS set-up to enable CD-ROM boot in the correct sequence.

Assuming no other IPLDs, which contain bootable data, are found, the PC 100 accesses the tape drive 140, in step 540, and issues a SCSI "INQUIRY". In response, in step 545, the tape drive 140, operating in DR Mode, identifies itself as a CD-ROM drive. Then, in step 550, the PC 100 reads the beginning of the CD-ROM image from the tape drive 140 to check for a bootable CD-ROM file system, and, when returned by the tape drive 140 in step 555, the PC 100 designates the tape drive 140 as the boot path in step 560.

This means that the PC 100 will boot from the CD-ROM image in the tape drive 140 path, even if there are other, real CD-ROM drive devices present in the system (as long as they do not contain a bootable CD-ROM drive). The only other requirement for the present DR operation to function is tat the PC 100 BIOS, or SCSI host adaptor BIOS, supports bootable CD-ROM drives (which is typically the case in all modem SCSI host adaptor cards or motherboard chipsets).

In step 565, the PC 100 reads the entire CD-ROM image, which is returned by the tape drive 140 in step 570 and which comprises the DR operating system and the backup application software.

Next, in step 575, the PC 100 begins processing the backup application software for DR and issues a SCSI Mode Select command that accesses the DR Mode page to terminate DR Mode and begin Normal Mode, to continue with normal tape drive operation. Alternatively, or additionally, some backup application software is configured to copy bootable data onto the hard disc drive, and then requires the PC 100 to be re-booted. If this is the case, the tape drive 140 can easily be reset automatically by the running application software sending a Mode Select SCSI command to the drive before it triggers a system reboot.

In either case, in step 580, the tape drive 140 reverts to Normal Mode, the buffer 160 is purged and the tape media 175 is allowed to be physically accessed by standard tape drive commands (Locate, Space, Read etc.). This allows the PC's recovery to proceed as if it had initially booted from DR floppy disk.

Finally, in step 585, the PC 100 continues to retrieve from the tape drive 140 the backed up data stored on tape media 175 until the whole PC 100 file system is restored to hard disk drive 130. Thereafter, the re-built PC 100 can boot from the hard disk drive 130 as normal.

In preferred embodiments of the present invention, it is typically advantageous to cache as much of the CD-ROM image into the buffer 160 as possible, as will now be described.

Since the largest currently available bootable DR floppy disk set known to the inventors consists of four floppy disks, holding approximately 6 Mbytes of data, an entire CD-ROM image will fit into an 8 Mbytes buffer. However, many tape drives do not have 8 Mbytes of buffer memory (they usually only have 1-2 Mbytes), or, generally, the buffer size may be less than the size of the CD-ROM image. Therefore, such drives will need to access the tape media more than once in response to CD-ROM image access commands (Seek, Read).

In these cases, access to the correct data on tape media is ensured by converting the logical block address in the CD-ROM drive access commands into a physical location on tape media. This is simplified by ensuring that the CD-ROM image on the tape media is written using a fixed 2 Kbytes block size (which is the same as read CD-ROM media). Then, the conversion of a random-access command to a sequential tape media position can be achieved by using a LOCATE command to move to the X'th block down the tape media, where:
X = (CD image block offset from BOT) + (Block address requested in Seek/Read)

Tape drive performance, when not all data can fit into the buffer, is optimised by reading the maximum amount of image data into the buffer on each access to the physical tape media, and using the data in the buffer as a read-ahead cache for subsequent accesses. Also, the performance can be further improved by permanently (but only while reading the CD-ROM image) caching the frequently accessed blocks in a separate cache segment in the buffer; for example, the file system access table (FAT) that lists the logical locations of files within the DR image file bootable file system could be permanently cached.

The caching scheme applied in accordance with the present embodiment, which can be varied as appropriate for any particular situation, is defined as:
permanently cache the first 64 blocks of the CD-ROM image; and
dynamically read-ahead to fill remaining buffer cache space.

Generally, if data requested by a CD-ROM image read is not already cached in the buffer, then the data is read from the tape media by using the standard tape drive LOCATE and READ functions. The LOCATE command is used to move the tape media to the required starting read block location, and then the READ command is used in fixed block mode to read the requested number of blocks from the tape into the buffer.

## Claims

1. Magnetic tape data storage and retrieval apparatus, comprising:
interface means for receiving control signals from a host computer and for returning response signals to the host computer;
selection means for selecting a first mode of operation or a second mode of operation of the apparatus; and
processing means for generating responses to received control signals in dependence upon the selected mode of operation, said responses being arranged:
a) in the first mode, into a format normally associated with a particular initial program load device; and
b) in the second mode, into a format normally associated with a magnetic tape data storage and retrieval apparatus.

2. Apparatus according to claim 1, wherein, in the first mode, the processing means is arranged to generate, in reply to a device type inquiry signal from the host computer, a response identifying the apparatus as being the particular initial program load device rather than as being a magnetic tape data storage and retrieval apparatus.

3. Apparatus according to claim 1 or claim 2, wherein, in the first mode, the processing means is arranged to generate a response, in reply to a request signal from the host computer to read and return data from a specific portion of a substantially random access data storage medium of the initial program load device, the response comprising data read from tape media, said data being arranged in the response in the format associated with the particular initial program load device.

4. Apparatus according to any one of the preceding claims, wherein, when the first mode of operation is selected, the processing means is arranged to locate data on the tape media identifying the tape media as being bootable.

5. Apparatus according to claim 4, wherein the processing means is arranged to read from the tape media, all, or at least some, of the bootable data into a memory buffer of the apparatus.

6. Apparatus according to claim 5, wherein the processing means is ranged to read all, or at least some, of the bootable data into said memory buffer to act as a read-ahead cache.

7. Apparatus according to any one of the preceding claims, wherein, in the second mode, the processing means is ranged to generate a response to a device type inquiry signal from the host computer identifying the apparatus as being a magnetic tape data storage and retrieval apparatus.

8. Apparatus according to claim 7, wherein, in the second mode, the processing means is ranged to generate a response, in reply to a request signal from the host computer to read data from tape media, the response being ranged in the format associated with the magnetic tape data storage and retrieval apparatus.

9. Apparatus according to any one of the preceding claims, wherein the selection means comprises means to select manually operation in the first mode.

10. Apparatus according to claim 9, wherein the selection means comprises a power-on sequence in which the apparatus is ranged to determine whether a manual function selector of the apparatus is being manually operated.

11. Apparatus according to claim 10, wherein the manual function selector is a manually-operated external switch normally dedicated to the function of ejecting the tape media from the device.

12. Apparatus according to any one of the preceding claims, wherein the selection means comprises means, when in the first mode, to switch to operation in the second mode, in response to a respective signal received from the host computer.

13. Apparatus according to any one of the preceding claims, wherein the particular initial program load device is a CD-ROM drive.

14. A data processing system comprising:
a host computer comprising means arranged for controlling data backup and restore operations; and
connected to the host computer, a magnetic tape data storage and retrieval apparatus as claimed in any one of the preceding claims,
the means for processing data backup and restore operations being configured, for writing bootable system data to the magnetic tape data storage and retrieval apparatus as part of a backup operation.

15. A system according to claim 14, wherein the means for controlling data backup and restore operations is configured as part of a backup operation for writing to the magnetic tape data storage and retrieval apparatus bootable system data comprising at least some data normally associated with a particular initial program load device.

16. A system according to claim 14 or claim 15, wherein the means for controlling data backup and restore operations is configured as part of a backup operation for writing to the magnetic tape data storage and retrieval apparatus bootable system data comprising components of an operating system necessary for the host computer to access a magnetic tape data storage and retrieval apparatus and restore from tape media a backed-up file system.

17. A system according to any one of claims 14 to 16, wherein the means for controlling data backup and restore operations is configured as part of a restore operation to send a selection signal to the magnetic tape data storage and retrieval apparatus to select the second mode of operation.

18. A method of backing up data from a host computer to a magnetic tape data storage and retrieval apparatus as claimed in any one of claims 1 to 13, the method comprising:
arranging bootable image data into a data set to be backed up, said bootable image data including data normally associated with booting from a particular initial program load device; and
transmitting the data set to a magnetic tape data storage and retrieval apparatus.

19. A method according to claim 18, wherein the bootable image data conforms to the ISO 9660 standard and the El Torito bootable CD-ROM specification.

20. A method according to claim 18 or claim 19, wherein the bootable image data comprises an operating system image including a magnetic tape data storage and retrieval apparatus device driver and application software for enabling a host computer to communicate with a magnetic tape data storage and retrieval apparatus for the purpose of restoring a previously backed up data set from tape media.

21. A method according to any one of claims 18 to 20, comprising the steps of ordering the bootable image data such that the data is arranged to substantially follow a boot sequence of a host computer and storing the data to tape media, such that the data can be retrieved from tape media using a series of read requests to read data in a substantially sequential fashion from the tape media.

22. A method of restoring to a host computer data from tape media, the method being suitable for recovering a file system of the host computer and comprising the steps of:
connecting to the host computer magnetic tape data storage and retrieval apparatus as claimed in any one of claims 1 to 13, said apparatus containing tape media having a bootable image and operating in the first mode of operation as an initial program load device;
initiating a boot sequence of the host computer, the boot sequence including the steps of searching for an initial program load device, locating the magnetic tape data storage and retrieval apparatus and recognising it as an initial program load device and determining that bootable media is present in the device;
booting from data stored on the tape media; and
restoring the data from the tape media.
